# EUROPEAN PATENT SPECIFICATION

(11) **EP 2 832 794 B1**
(45) Date of publication and mention of the grant of the patent: **22.08.2018**
(21) Application number: 13768762.0
(22) Date of filing: 13.03.2013
(51) Int. Cl.: C08L 67/02, C08K 5/098

(54) **POLYBUTYLENE TEREPHTHALATE RESIN COMPOSITION AND MOLDED ARTICLE**
POLYBUTYLEN-TEREPHTHALAT-HARZZUSAMMENSETZUNG UND FORMARTIKEL DARAUS
COMPOSITION DE RÉSINE DE TÉRÉPHTALATE DE POLYBUTYLÈNE ET ARTICLE MOULÉ

(30) Priority: 30.03.2012 JP 2012080394
(43) Date of publication of application: 04.02.2015
(73) Proprietor: Wintech Polymer Ltd., Minato-ku Tokyo 108-8280 (JP)
(72) Inventor: SATO, Yuri, Fuji-shi Shizuoka 416-8533 (JP); GOSHIMA, Kazuya, Fuji-shi Shizuoka 416-8533 (JP)
(74) Representative: Zumstein, Angela
(86) International application number: PCT/JP2013/057105
(87) International publication number: WO 2013/146281

(56) References cited:
- JP-A- H 069 858
- JP-A- H0 940 765
- JP-A- H06 234 909
- JP-A- 2001 114 880
- JP-A- 2005 179 604
- JP-A- 2007 204 650
- US-A1- 2009 264 611

## Description

The present invention relates to a method for producing a polybutylene terephthalate resin composition for an interior part of an automobile.

Polyester resins have excellent mechanical characteristics, heat resistance, and moldability and are therefore widely used in automotive parts, films, electrical and electronic parts, etc. In particular, a polybutylene terephthalate resin, one type of the polyester resins, shows a high stiffening effect by an inorganic reinforcing material and has excellent chemical resistance and is therefore widely used as a raw material for producing industrial molded articles such as connectors, relays, switches, and other components of automobiles and electrical and electronic equipment.

However, the above-mentioned polybutylene terephthalate resin shows a phenomenon that gases occurring by, for example, decomposition of the resin during molding are emitted when the molded article is used. Among the occurring gases, the emission of a low-molecular-weight organic compound that is volatile even at ordinary temperature (volatile organic compound: VOC) is problematic.

Recently, in automotive manufacturers, standards for VOC amounts emitted from interior parts of an automobile have been established, and various measuring methods and regulations have been established in each automotive manufacturer. The German Association of the Automotive Industry has established a test method, VDA 277, for detecting volatile organic compounds.

Specifically, for example, as described in page 26 of C. Henneuse and T. Pacary (2003) Emissions from Plastics, Rapra Review Reports, Vol.14, No.1, there is a demand for reducing the VOC emission amount, measured by the VOC measuring method defined in VDA 277, to 50 µgC/g or less.

JP H06 9858 A describes an increase in the amount of tetrahydrofuran (THF), which is a volatile organic compound, occurring in molding in a polybutylene terephthalate resin having a large amount of terminal hydroxyl groups, and discloses a use of a polybutylene terephthalate resin having a low concentration of terminal hydroxyl groups. It is also disclosed that the terminal hydroxyl groups of a polybutylene terephthalate resin can be stabilized by adding an alkali metal salt to the polybutylene terephthalate resin. However, as described also in Patent Document 1, since "the concentration of terminal hydroxyl groups is determined by subtracting the number of terminal COOH groups from the total number of terminal groups", "a low concentration of terminal hydroxyl groups" simultaneously means "a large number of terminal COOH groups". Such a polybutylene terephthalate resin is disadvantageous in hydrolysis resistance.

JP H10 30054 A discloses that the occurrence of THF is prevented by adding a titanium catalyst, a phosphorus compound, and an alkali or alkaline-earth metal during the polymerization of the polybutylene terephthalate resin. However, this method has problems, such as a reduction in the rate of polymerization, depending on the type and the addition amount of the alkali metal compound used.

In addition, JP 2010 100668 A discloses a method for reducing the concentrations of foreign substances and terminal carboxyl groups while preventing a reduction in the rate of polymerization by divided addition of an organic titanium compound and an alkali metal salt during polymerization of the polybutylene terephthalate resin. However, in this method, since the step of adding an organic titanium compound and an alkali metal salt is divided, the control is complicated. Furthermore, in this method, a device for addition is additionally required, and diversion of existing facilities is therefore difficult. Accordingly, the method needs a further investment and is economically disadvantageous.

### DISCLOSURE OF THE INVENTION

### Problems to be Solved by the Invention

If a VOC occurs during molding of a polybutylene terephthalate resin composition containing a polybutylene terephthalate resin, the VOC is readily emitted from a molded article formed by molding the resin composition when the molded article is used.

The present invention was made for solving the above-described problems, and it is an object of the present invention to provide a technology of making it difficult for VOCs, including VOCs other than THF, to emit from a molded article formed by molding a polybutylene terephthalate resin composition.

### Means for Solving the Problems

The present inventors have diligently studied for solving the above-mentioned problems. As a result, the inventors have found that in the use of a polybutylene terephthalate resin produced by transesterification, as in JP H06 9858 A, aldehyde derived from alcohol as a by-product causes an increase in the VOC amount occurring during the molding and have further found that the use of a polybutylene terephthalate resin composition containing a polybutylene terephthalate resin produced by direct esterification and an alkali compound can prevent the problem caused by the aldehyde and can reduce the VOC emission amount in the use of the molded article, and accomplished the present invention. More specifically, the present invention provides the followings.
(1) A method for producing a polybutylene terephthalate resin composition for an interior part of an automobile, wherein the polybutylene terephthalate resin composition comprises a polybutylene terephthalate resin produced by direct esterification, and an alkali compound, wherein an amount of a VOC emitted from a molded article formed by molding the polybutylene terephthalate resin composition is 50 µgC/g or less when measured by a VOC measuring method defined in the German Association of the Automotive Industry VDA 277, wherein the polybutylene terephthalate resin composition is produced in a melting and kneading device, and wherein the alkali compound is fed in a form dissolved in water to the melting and kneading device.
(2) The method for producing a polybutylene terephthalate resin composition according to aspect (1), wherein the alkali compound in the polybutylene terephthalate resin composition is added in an amount of 0.01 parts by mass or more and 0.1 parts by mass or less based on 100 parts by mass of the polybutylene terephthalate resin.
(3) The method for producing a polybutylene terephthalate resin composition according to aspect (1) or (2), wherein the alkali compound is potassium acetate.

### Effects of the Invention

In a molded article formed by molding the polybutylene terephthalate resin composition of the present invention, the VOC amount emitted from the molded article when it is used is low.

### PREFERRED MODE FOR CARRYING OUT THE INVENTION

Embodiments of the present invention will now be described. Note that the present invention is not limited to the following embodiments.

### Polybutylene terephthalate resin composition

The polybutylene terephthalate resin composition contains a polybutylene terephthalate resin and an alkali compound.

### [Polybutylene terephthalate resin]

The polybutylene terephthalate resin used in the present invention is a common polybutylene terephthalate resin and includes a repeating unit derived from at least terephthalic acid and a repeating unit derived from at least an alkylene glycol having 4 carbon atoms (1,4-butanediol).

The polybutylene terephthalate resin used in the present invention is a polybutylene terephthalate resin produced by direct esterification. Direct esterification and transesterification are known as the methods of producing such polybutylene terephthalate resins. In the present invention, the polybutylene terephthalate resin is produced by direct esterification, and accordingly, as described below, the VOC amount occurring from a molded article can be reduced.

The direct esterification is a method using terephthalic acid and 1,4-butanediol as main raw materials and reacting the terephthalic acid and the 1,4-butanediol in the presence of an esterification catalyst. Meanwhile, the transesterification is a method using a dialkyl terephthalate and 1,4-butanediol as main raw materials and reacting the terephthalic acid and the 1,4-butanediol in the presence of a transesterification catalyst.

In direct esterification, water is generated by esterification, whereas in the transesterification, alcohol is generated. For example, when a polybutylene terephthalate resin is produced using dimethyl terephthalate, methanol is generated. Methanol changes into formaldehyde and thereby increases the VOC amount occurring from a molded article. Thus, in the case of producing a polybutylene terephthalate resin by transesterification, alcohol is generated as a by-product. This alcohol changes into aldehyde and thereby increases the VOC amount occurring from a molded article. In contrast, direct esterification does not generate alcohol as a by-product, and therefore no emission of aldehyde derived from alcohol as a by-product occurs from a molded article.

In the present invention, it is sufficient that the polybutylene terephthalate resin is produced by the direct esterification, and the production conditions are not particularly limited. Usable examples of the esterification catalyst include antimony compounds, germanium compounds, titanium compounds, tin compounds, alkaline-earth metal compounds, manganese compounds,- and zinc compounds. The amount of the catalyst is also not particularly limited and can be appropriately determined.

The reaction conditions such as reaction temperature, reaction pressure, and reaction time are also not particularly limited and may be appropriately determined depending on, for example, the desired molecular weight.

The thus-produced polybutylene terephthalate resin includes a repeating unit derived from terephthalic acid and a repeating unit derived from 1,4-butanediol. The polybutylene terephthalate resin is not limited to a homopolybutylene terephthalate resin composed of butylene terephthalate units and may be a copolymer containing butylene terephthalate units in an amount of 60 mol% or more (in particular, 75 mol% or more and 95 mol% or less).

Examples of the dicarboxylic acid component (comonomer component) other than terephthalic acid include C₈₋₁₄ aromatic dicarboxylic acids such as isophthalic acid, phthalic acid, 2,6-naphthalenedicarboxylic acid, and 4,4'-dicarboxy diphenyl ether; C₄₋₁₆ alkanedicarboxylic acids such as succinic acid, adipic acid, azelaic acid, and sebacic acid; and C₅₋₁₀ cycloalkanedicarboxylic acids such as cyclohexanedicarboxylic acid. These dicarboxylic acid components may be used alone or in combination of two or more thereof.

Examples of the glycol component (comonomer component) other than 1,4-butanediol include C₂₋₁₀ alkylene glycols such as ethylene glycol, propylene glycol, trimethylene glycol, 1,3-butylene glycol, hexamethylene glycol, neopentyl glycol, and 1,3-octanediol; polyoxyalkylene glycols such as diethylene glycol, triethylene glycol, and dipropylene glycol; alicyclic diols such as cyclohexanedimethanol and hydrogenated bisphenol A; aromatic diols such as bisphenol A and 4,4'-dihydroxybiphenyl; and C₂₋₄ alkylene oxide adducts of bisphenol A such as ethylene oxide 2-mole adduct of bisphenol A and propylene oxide 3-mole adduct of bisphenol A. These glycol components can be used alone or in combination of two or more thereof.

The polybutylene terephthalate resin used in the present invention may have any amount of terminal carboxyl groups. The present invention can reduce the VOC amount occurring from a molded article even if the polybutylene terephthalate resin having a small amount of terminal carboxyl groups, i.e., a large amount of terminal hydroxyl groups is used.

In a polybutylene terephthalate resin having terminal hydroxyl groups, the terminal hydroxyl groups generate tetrahydrofuran (THF) together with butylene groups that bind to the terminal hydroxyl groups. THF occurs when a molded article is formed using a polybutylene terephthalate resin having a large amount of terminal hydroxyl groups. Since THF is a VOC, the VOC amount emitted from the molded article is increased. However, in the present invention, since the polybutylene terephthalate resin is produced by direct esterification and is used together with an alkali compound, even if the polybutylene terephthalate resin has a large amount of terminal hydroxyl groups, the VOC emission amount can be suppressed.

In addition, a polybutylene terephthalate resin having a small amount of terminal carboxyl groups shows excellent hydrolysis resistance. Accordingly, the molded article produced using the polybutylene terephthalate resin composition has excellent hydrolysis resistance, and also the VOC emission amount is low.

Herein, a small amount of terminal carboxyl groups refers to 40 meq/kg or less. From the viewpoint of further enhancing the hydrolysis resistance, the amount of terminal carboxyl groups is more preferably 25 meq/kg or less. The present invention can notably reduce the VOC amount occurring from a molded article even if the amount of the terminal carboxyl groups of a polybutylene terephthalate resin is thus reduced to 25 meq/kg or less to prevent the strength of the molded article from decreasing by hydrolysis under a high temperature and humidity environment. The amount of terminal carboxyl groups can be determined by dissolving a sample of pulverized polybutylene terephthalate in benzyl alcohol at 215°C for 10 minutes and titrating the solution with an aqueous solution of 0.01 N sodium hydroxide.

The polybutylene terephthalate resin used in the present invention may have any intrinsic viscosity within a range that does not impair the object of the present invention. The polybutylene terephthalate resin preferably has an intrinsic viscosity (IV) of 0.65 dL/g or more and 1.4 dL/g or less. In the case of using a polybutylene terephthalate resin having an intrinsic viscosity in such a range, in particular, the resulting polybutylene terephthalate resin composition can have excellent moldability. The intrinsic viscosity can be controlled by blending polybutylene terephthalate resins having different intrinsic viscosities. For example, a polybutylene terephthalate resin having an intrinsic viscosity of 0.9 dL/g can be prepared by blending a polybutylene terephthalate resin having an intrinsic viscosity of 1.0 dL/g and a polybutylene terephthalate resin having an intrinsic viscosity of 0.7 dL/g. The intrinsic viscosity (IV) of a polybutylene terephthalate resin can be measured in o-chlorophenol at 35°C.

The content of the polybutylene terephthalate resin in the polybutylene terephthalate resin composition is not particularly limited and is preferably 10% by mass or more and less than 99.99% by mass. A content of the polybutylene terephthalate resin of 30% by mass or more can improve the physical properties of a molded article and is therefore particularly preferred. The content is more preferably 50% by mass or more and less than 99.99% by mass.

### [Alkali compound]

The polybutylene terephthalate resin composition contains an alkali compound. The VOC amount emitted from a molded article formed by molding the resin composition can be reduced by adding an alkali compound to the composition.

The alkali compound that can be used in the present invention is not particularly limited, and examples thereof include alkali metal salts and alkaline-earth metal salts, specifically, potassium chloride, potassium alum, potassium formate, tripotassium citrate, dipotassium hydrogen citrate, potassium dihydrogen citrate, potassium gluconate, potassium succinate, potassium butyrate, dipotassium oxalate, potassium hydrogen oxalate, potassium stearate, potassium phthalate, potassium hydrogen phthalate, potassium metaphosphate, potassium malate, tripotassium phosphate, dipotassium hydrogen phosphate, potassium dihydrogen phosphate, potassium nitrite, potassium benzoate, potassium hydrogen tartrate, potassium bioxalate, potassium biphthalate, potassium bitartrate, potassium bisulfate, potassium nitrate, potassium acetate, potassium hydroxide, potassium carbonate, potassium sodium carbonate, potassium hydrogen carbonate, potassium lactate, potassium sulfate, potassium hydrogen sulfate, sodium chloride, sodium formate, trisodium citrate, disodium hydrogen citrate, sodium dihydrogen citrate, sodium gluconate, sodium succinate, sodium butyrate, disodium oxalate, sodium hydrogen oxalate, sodium stearate, sodium phthalate, sodium hydrogen phthalate, sodium metaphosphate, sodium malate, trisodium phosphate, disodium hydrogen phosphate, sodium dihydrogen phosphate, sodium nitrite, sodium benzoate, sodium hydrogen tartrate, sodium bioxalate, sodium biphthalate, sodium bitartrate, sodium bisulfate, sodium nitrate, sodium acetate, sodium hydroxide, sodium carbonate, sodium hydrogen carbonate, sodium lactate, sodium sulfate, sodium hydrogen sulfate, lithium chloride, lithium formate, trilithium citrate, dilithium hydrogen citrate, lithium dihydrogen citrate, lithium gluconate, lithium succinate, lithium butyrate, dilithium oxalate, lithium hydrogen oxalate, lithium stearate, lithium phthalate, lithium hydrogen phthalate, lithium metaphosphate, lithium malate, trilithium phosphate, dilithium hydrogen phosphate, lithium dihydrogen phosphate, lithium nitrite, lithium benzoate, lithium hydrogen tartrate, lithium bioxalate, lithium biphthalate, lithium bitartrate, lithium bisulfate, lithium nitrate, lithium acetate, lithium hydroxide, lithium carbonate, lithium hydrogen carbonate, lithium lactate, lithium sulfate, lithium hydrogen sulfate, calcium chloride, calcium formate, calcium citrate, calcium gluconate, calcium succinate, calcium butyrate, calcium oxalate, calcium stearate, calcium phthalate, calcium metaphosphate, calcium malate, calcium phosphate, calcium hydrogen phosphate, calcium dihydrogen phosphate, calcium nitrite, calcium benzoate, calcium tartrate, calcium bioxalate, calcium biphthalate, calcium bitartrate, calcium bisulfate, calcium nitrate, calcium acetate, calcium hydroxide, calcium carbonate, calcium lactate, and calcium sulfate. Among these alkali compounds, preferred are potassium acetate and calcium carbonate, and particularly preferred is potassium acetate.

The content of the alkali compound contained in the polybutylene terephthalate resin composition is not particularly limited and may be determined depending on a desired VOC emission amount and other factors and is preferably 0.01 parts by mass or more and 0.1 parts by mass or less based on 100 parts by mass of the polybutylene terephthalate resin. A content of 0.01 parts by mass or more can sufficiently prevent the generation of VOCs derived from a monomer component and is therefore preferred, whereas a content of 0.1 parts by mass or less can prevent the occurrence of VOCs caused by decomposition of the polybutylene terephthalate resin by the alkali compound and is therefore preferred. The content is more preferably 0.01 parts by mass or more and 0.05 parts by mass or less. Even if the content of the alkali compound is outside the above-mentioned preferred range, the VOC emission amount may be suppressed within a desired range depending on the type of the polybutylene terephthalate resin (for example, depending on the molecular weight, the amount of the terminal carboxyl groups, and the copolymer component contained). Such cases are also within the scope of the present invention.

### [Other components]

The polybutylene terephthalate resin composition may contain a component other than the above-described essential components. Examples of the other component include additives such as fillers (such as inorganic fillers), nucleating agents, pigments, antioxidants, stabilizers, plasticizers, lubricants, mold releasing agents, flame retardants; and other resins.

### [Method for producing polybutylene terephthalate resin composition]

The polybutylene terephthalate resin composition may be produced by any method. The resin composition can be prepared by generally known facilities and method for preparing resin compositions. For example, a mixture of necessary components is kneaded with a single or twin screw extruder or another melting and kneading device, and the preparation can be performed in the form of a pellet for molding. The kneading may be performed with a plurality of extruders or other melting and kneading devices. All components may be simultaneously fed from a hopper. Alternatively, a part of the components may be fed from a side feed opening.

The alkali compound is fed in a form dissolved in water to a melting and kneading device such as an extruder. This is because the alkali compound can be more uniformly dispersed in the resin composition. Furthermore, an alkali compound may function as a nucleating agent when it is added in a solid form. However, addition of an alkali compound in a form dissolved in water can prevent the alkali compound from functioning as a nucleating agent and is therefore preferred from the viewpoint of reducing the risk of affecting the toughness and other properties. The concentration of the alkali compound in this aqueous solution is preferably 1 mol/L or more and 100 mol/L or less. This is because, in the case of a concentration of the alkali compound of less than 1 mol/L, the water amount is high to accelerate hydrolysis of the polybutylene terephthalate, whereas in the case of a concentration of the alkali compound of higher than 100 mol/L, the alkali compound is hardly uniformly dispersed.

### [Method for producing molded article]

A polybutylene terephthalate resin composition pellet produced by a conventionally known molding method, such as injection molding, as described above can be used as a raw material for producing a molded article. Since the pellet of the resin composition is not necessarily produced, each component may be directly supplied to a melting and kneading device such as an extruder to produce a molded article.

In the molded article formed as described above, the VOC emission amount is 50 µgC/g or less when measured by the VOC measuring method defined in the German Association of the Automotive Industry VDA 277. Accordingly, in the molded article formed by molding the polybutylene terephthalate resin composition, the VOC amount emitted in the use is low. The VOC emitted in the use is particularly problematic when the molded article is used inside a car or room, for example, in the use as an interior part of an automobile. The molded article can be preferably used inside a car or indoors.

### EXAMPLES

The present invention will now be described in more detail by examples, but is not limited to the following examples.

### Materials

Polybutylene terephthalate resin produced by direct esterification: "DURANEX (registered trademark)", manufactured by WinTech Polymer Ltd., IV: 0.69 dL/g, the amount of terminal carboxyl groups: 23 meq/kg

Potassium acetate: potassium acetate, manufactured by Wako Pure Chemical Industries, Ltd.

Calcium carbonate: Whiton P-30, manufactured by Toyo Fine Chemical K.K.

### Method for producing resin composition

Each raw material was prepared by mixing a polybutylene terephthalate resin produced by direct esterification and potassium acetate or calcium carbonate at a ratio shown in Table 1. The raw material was fed to a twin screw extruder (TEX-30, manufactured by The Japan Steel Works, Ltd.) and was molten and kneaded to produce a polybutylene terephthalate resin pellet. The conditions, excluding the cooling time, are as follows.

### (Melting and kneading conditions)

Cylinder temperature: 260°C
Screw speed: 130 rpm
Extrusion output: 12 kg/hr

### Production of molded article

Each of the resin pellets of Examples and Comparative Examples was supplied to an injection molding machine ("J75EP", manufactured by The Japan Steel Works, Ltd.), and a molded article (100 mm × 40 mm × 2 mm) was produced under the following molding conditions.

### (Molding conditions)

Molding conditions: Cylinder temperature: 250°C
Injection pressure: 60 (MPa)
Injection speed: 1.0 (m/min)
Mold temperature: 60 (°C)

### Measurement VOC emission amount

Each of the molded articles in Examples and Comparative Examples was cut into pieces of 10 to 25 mg to prepare a sample. About 2 g of the sample was put into a 22-mL vial, and the weight of the sample was precisely measured. The vial was sealed, and the sample was heated at 120°C for 5 hours with HS-GC. The peak integral area of volatile organic components detected by gas chromatography was calculated and was converted into the weight in terms of acetone used as a standard to determine the volatile organic compound amount per weight of the molded article (µgC/g). The results are shown in Table 1.

**[Table 1]**

| | Comparative Example 1 | Example 1 | Example 2 | Example 3 | Example 4 | Comparative Example 2 |
|---|---|---|---|---|---|---|
| PBT (parts by mass) | 100 | 100 | 100 | 100 | 100 | 100 |
| Potassium acetate (parts by mass) | 0.00 | 0.02 | 0.05 | 0.10 | | 0.50 |
| Calcium carbonate (parts by mass) | | | | | 0.10 | |
| VOC amount (µgC/g) | 87 | 31 | 42 | 49 | 40 | 100 or more |

As obvious from Table 1, it was demonstrated that the VOC amount emitted from a molded article can be notably reduced by using a combination of a polybutylene terephthalate resin produced by direct esterification and an alkali compound.

## Claims

1. A method for producing a polybutylene terephthalate resin composition for an interior part of an automobile,
wherein the polybutylene terephthalate resin composition comprises a polybutylene terephthalate resin produced by direct esterification, and an alkali compound,
wherein the polybutylene terephthalate resin has terminal carboxyl groups in an amount of 40 meq/kg or less,
wherein an amount of a VOC emitted from a molded article formed by molding the polybutylene terephthalate resin composition is 50 µgC/g or less when measured by a VOC measuring method defined in the German Association of the Automotive Industry VDA 277,
wherein the polybutylene terephthalate resin composition is produced in a melting and kneading device, and
wherein the alkali compound is fed in a form dissolved in water to the melting and kneading device.

2. The method for producing a polybutylene terephthalate resin composition according to Claim 1, wherein
the alkali compound in the polybutylene terephthalate resin composition is added in an amount of 0.01 parts by mass or more and 0.1 parts by mass or less based on 100 parts by mass of the polybutylene terephthalate resin.

3. The method for producing a polybutylene terephthalate resin composition according to Claim 1 or 2, wherein the alkali compound is potassium acetate.

## Patentansprüche

1. Verfahren zur Herstellung einer Polybutylen-Terephthalat-Harz-Zusammensetzung für einen Innenraum eines Kraftfahrzeugs,
wobei die Polybutylen-Terephthalat-Harz-Zusammensetzung ein Polybutylen-Terephthalat-Harz, hergestellt durch direkte Veresterung, und eine Alkali-Verbindung umfasst,
wobei das Polybutylen-Terephthalat-Harz endständige CarboxylGruppen in einer Menge von 40 mÄquiv./kg oder weniger aufweist,
wobei eine Menge an VOC, die von einem durch Formen der Polybutylen-Terephthalat-Harz-Zusammensetzung gebildeten Formkörper emittiert wird, 50 µgC/g oder weniger beträgt, wenn sie nach einem VOC-Mess-Verfahren gemessen wird, das im Deutschen Verband der Automobilindustrie VDA 277 definiert ist, wobei die Polybutylen-Terephthalat-Harz-Zusammensetzung in einer Schmelz- und Knet-Vorrichtung hergestellt wird, und
wobei die Alkali-Verbindung in einer in Wasser gelösten Form der Schmelz- und Knet-Vorrichtung zugeführt wird.

2. Verfahren zur Herstellung einer Polybutylen-Terephthalat-Harz-Zusammensetzung nach Anspruch 1, wobei die Alkali-Verbindung in der Polybutylen-Terephthalat-Harz-Zusammensetzung in einer Menge von 0,01 Masseteilen oder mehr und 0,1 Masseteilen oder weniger, basierend auf 100 Masseteilen des Polybutylen-Terephthalat-Harzes, zugegeben wird.

3. Verfahren zur Herstellung einer Polybutylen-Terephthalat-Harz-Zusammensetzung nach Anspruch 1 oder 2, wobei die Alkali-Verbindung Kaliumacetat ist.

## Revendications

1. Procédé pour la production d'une composition de résine de poly(téréphtalate de butylène) pour une pièce d'intérieur d'une automobile,
dans lequel la composition de résine de poly(téréphtalate de butylène) comprend une résine de poly(téréphtalate de butylène) produite par estérification directe et un composé alcalin,
dans lequel la résine de poly(téréphtalate de butylène) a des groupes carboxyle terminaux en une quantité inférieure ou égale à 40 mEq/kg,
dans lequel une quantité de COV émis à partir d'un article moulé formé par moulage de la composition de résine de poly(téréphtalate de butylène) lorsqu'elle est mesurée par une méthode de mesure de COV définie dans la méthode VDA 277 de l'association allemande de l'industrie automobile est inférieure ou égale à 50 µg de C/g,
dans lequel la composition de résine de poly(téréphtalate de butylène) est produite dans un dispositif de fusion et de malaxage et
dans lequel le composé alcalin est introduit sous une forme dissoute dans de l'eau dans le dispositif de fusion et de malaxage.

2. Procédé pour la production d'une composition de résine de poly(téréphtalate de butylène) selon la revendication 1, dans lequel
le composé alcalin dans la composition de résine de poly(téréphtalate de butylène) est ajouté en une quantité supérieure ou égale à 0,01 partie en masse et inférieure ou égale à 0,1 partie en masse pour 100 parties en masse de la résine de poly(téréphtalate de butylène).

3. Procédé pour la production d'une composition de résine de poly(téréphtalate de butylène) selon la revendication 1 ou 2, dans lequel le composé alcalin est l'acétate de potassium.
